Europäisches Patentamt

European Patent Office

Office européen des brevets

(19)

(11) **EP 0 985 920 A1**

(12) **DEMANDE DE BREVET EUROPEEN**

(43) Date de publication:
**15.03.2000 Bulletin 2000/11**

(51) Int Cl.⁷: **G01N 21/33**, G01J 3/28,
G01N 21/85

(21) Numéro de dépôt: **99430017.6**

(22) Date de dépôt: **07.09.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **11.09.1998 FR 9811583**
**30.11.1998 FR 9815246**

(71) Demandeur: **Naphtachimie**
**92400 Courbevoie (FR)**

(72) Inventeurs:
• **Trebuchon, Pierre**
**13500 Martigues (FR)**
• **El Khorassani, Houda**
**13090 Aix en Provence (FR)**
• **Thomas, Olivier**
**30380 Saint-Christol-Les-Ales (FR)**

(74) Mandataire: **Domange, Maxime et al**
**Cabinet Beau de Lomenie,**
**232, avenue du Prado**
**13295 Marseille Cedex 08 (FR)**

(54) **Procédé et dispositif de contrôle de qualité d'effluents**

(57)      La présente invention est relative à un procédé de contrôle de qualité d'effluents et à un dispositif permettant sa mise en oeuvre ; le domaine technique de l'invention est celui de la fabrication d'appareils d'analyse d'effluents liquides rejetés par des sites industriels ; le procédé d'analyse d'un effluent liquide par spectrophotométrie d'absorption dans le domaine visible ou ultraviolet comporte les opérations suivantes ; a) on choisit un petit nombre de spectres connus d'absorption, parmi une pluralité de spectres contenus dans une bibliothèque, pour former une base de spectres connus ; b) on détermine par déconvolution la contribution des spectres de la base dans la formation d'un spectre d'absorption mesuré pour un échantillon dudit effluent, et on détermine par soustraction un spectre d'écart, et lorsqu'une valeur du spectre d'écart dépasse un seuil prédéterminé : soit, on modifie la base et on exécute un nouveau calcul de déconvolution (étape b) ci dessus), soit on enregistre le spectre mesuré ou bien le spectre d'écart, pour permettre de l'ajouter à la bibliothèque, soit on actionne une alarme.

FIG.2

**Description**

La présente invention est relative à un procédé de contrôle de qualité d'effluents et à un dispositif permettant sa mise en oeuvre.

Le domaine technique de l'invention est celui de la fabrication d'appareils d'analyse d'effluents liquides rejetés par des sites industriels, c'est-à-dire par des dispositifs de fabrication de produits, en particulier de produits chimiques.

La présente invention est plus particulièrement relative au traitement des effluents des industries chimiques, pétrochimiques et des raffineries de pétroles telles que les unités de production d'éthylène, de propylène ou de butadiène par vapocraquage, les installations de production de méthanol, d'urée, de monomères vinyliques (acétate et chlorure de vinyle notamment), d'élastomères (butadiène, néoprène, styrène) de polymères (polyuréthanne, polyéthylène, polypropylène, polybutène, polyisobutène, polystyrène, PVC, polyester) et de résines.

Les industries rejettent des effluents généralement aqueux et chargés de matières ou composition polluantes, organiques ou non organiques ou minérales, de nature très diversifiée : COV (Composés Organiques Volatils), hydrocarbures, phénols, acides organiques, composés organométalliques, métaux et non métaux, anions non organiques.

L'analyse des effluents peut être effectuée par des méthodes très diverses ; par analyse électrochimique, biologique, gravimétrique, conductimètrique, par chromatographie en phase gazeuse ou en phase liquide, par spectrométrie.

La mesure du caractère polluant d'un effluent s'apprécie également sur la base de paramètres physico-chimiques tels que température, pH, demande chimique ou biologique en oxygène (DCO, DBO), teneur en matières en suspension (MES).

Les méthodes connues d'analyse d'effluents comportent divers inconvénients :

- la plupart d'entre elles, en particulier les méthodes d'analyse par chromatographie, nécessitent l'utilisation de matériels très coûteux ;
- la plupart de ces méthodes et appareils d'analyse incluent des techniques et des technologies très complexes qui nécessitent des techniciens très qualifiés pour les utiliser ;
- chacune de ces méthodes est bien adaptée à la recherche d'une matière ou d'une composition particulière, mais ne permet pas de mesurer à la fois des niveaux ou paramètres globaux de pollution (DCO ou MES par exemple) et de détecter la présence de composes particuliers, organiques ou minéraux ;
- ces méthodes sont longues et demandent un temps relativement long avant de prendre une action.

Pour ces raisons notamment, ces procédés et appareils d'analyse sont utilisés en laboratoire uniquement.

Il est connu de contrôler la pollution d'effluents aqueux par l'analyse de spectres d'absorption, par un échantillon d'effluent, de rayonnements infrarouge ou ultraviolet ; le document EP-A-522 988 décrit un procédé de détection de pollution dans lequel :

- on extrait les composés organiques par deux solvants successivement utilisés (CCl4 puis CH3Br) ;
- on compare un spectre d'absorption IR (dans la bande 2,5 à 17 nm) à un ou plusieurs spectres de référence stockés dans une bibliothèque, après élimination du bruit de fond correspondant à l'absorption par les solvants,
- on actionne une alarme en fonction des résultats d'analyse.

Cette technique présente l'inconvénient de faire appel à des solvants qui peuvent être toxiques, et qui doivent être recyclés ; en outre, le temps de traitement est long (10 mn par mesure).

Le document EP-A-682 250 décrit un procédé qui comprend une destruction des matières en suspension par broyage ou dispersion ultrasonique suivie d'une photo-oxydation, et une spectrophotométrie d'absorption avant, pendant et après photo-oxydation ; la détermination des concentrations d'éléments ou composants recherchés s'effectue par déconvolution du spectre d'absorption par un échantillon de rayonnement UV (entre 200 et 300 nm) ; ce procédé a cependant des applications limitées à la caractérisation globale des matières organiques ou azotées en suspension ; en outre, le temps nécessaire au broyage et à l'oxydation conduit à des durées d'analyse ne permettant pas un contrôle en temps réel de la qualité des effluents.

Le document US-A-5,313,406 est relatif à un procédé d'analyse d'effluents gazeux qui met en oeuvre une méthode d'analyse de spectres IR par transformée de Fourier.

Le document WO92/07326 décrit un procédé d'étalonnage d'un analyseur de spectres d'absorption (infrarouge ou visible ou U.V.) dans lequel un spectre mesuré est analysé par un procédé séparé puis est utilisé pour ré-étalonner l'analyseur, ou bien dans lequel une alarme est déclenchée, lorsque le spectre mesuré n'est pas suffisamment corrélé avec des spectres d'échantillon ; ce procédé est destiné à l'analyse d'hydrocarbures ou de mélanges d'hydreaucarbures-eau.

Les différentes méthodes mathématiques d'analyse de spectres par comparaison à des spectres connus, telles que celles décrites dans le document US-A-5,313,406, sont d'un usage délicat car elles sont susceptibles de donner des résultats erronés, en particulier des concentrations négatives ; en outre les algorithmes correspondants nécessitent des puissances de calcul et des capacités de mémoire d'autant plus importantes que le nombre de spectres est élevé et que le nombre de valeurs (ou points ou raies) de chaque spectre est élevé.

La demande de brevet EP 753 724 (SECOMAM) décrit un spectrophotomètre portatif et autonome pour l'analyse spectrale, dans le domaine des longueurs d'onde correspondant au rayonnement ultraviolet, d'échantillons liquide, et l'utilisation de cet appareil pour analyser "in situ" des eaux résiduelles urbaines, des eaux industrielles ou des eaux de ruissellement.

La présente demande a pour objet de proposer une méthode améliorée d'analyse d'effluents liquides industriels par spectrophotométrie ultraviolette ou visible, et un appareil permettant sa mise en application.

La présente invention a pour objet de proposer un appareil d'analyse d'effluents liquides industriels susceptible d'être installé à demeure pour permettre un contrôle permanent, sensiblement continu ou intermittent, de la qualité des effluents.

Un objectif de l'invention est également de proposer un système (procédé et appareil) de diagnostic pour une installation de collecte et de traitement d'effluents industriels.

Un objectif de l'invention est de proposer un procédé et un appareil d'analyse d'effluents pour une installation de collecte et de traitement d'effluents qui comporte un bassin (ou réservoir) de collecte d'effluents auquel sont connectées plusieurs sources d'effluents, par l'intermédiaire de conduits de transport d'effluents, qui permettent de surveiller la charge polluante résultant du mélange des effluents provenant des différentes sources et qui permettent d'identifier celle(s) parmi les sources qui est à l'origine d'une composante de la charge polluante.

Les effluents liquides industriels susceptibles d'être traités par la présente invention sont généralement des effluents aqueux.

Selon un aspect de l'invention, on utilise un spectrophotomètre, par exemple tel que celui décrit dans le document EP 753 724 sus-cité, qui est installé à demeure ; on utilise également une unité électronique de traitement de données (UC) associée à une mémoire dans laquelle sont enregistrés une pluralité de spectres d'absorption (ultraviolet UV ou visible) de matières et de compositions déterminées pour former une bibliothèque de spectres ; l'unité électronique de traitement est connectée au spectrophotomètre qui lui délivre, de façon répétée, un spectre d'absorption (U.V. ou dans le domaine visible) mesuré pour un échantillon d'effluent (aqueux) prélevé ; selon une caractéristique essentielle de l'invention, l'unité électronique de traitement compare le spectre mesuré d'absorption avec un petit nombre de spectres connus faisant partie de la bibliothèque.

La comparaison est effectuée par une déconvolution comprenant la détermination de la contribution de chacun des spectres connus dans le spectre mesuré ; la différence entre la somme des contributions des spectres connus et le spectre mesuré constitue un spectre (ou fonction) d'écart.

Par déconvolution, il faut entendre la décomposition mathématique d'un spectre à l'aide de spectres de référence (spectres de composés purs ou de mélanges ou signaux résultant de manipulation physique - filtration par exemple - ou mathématique - différence par exemple - des spectres précédents) permettant d'obtenir une combinaison linéaire entre eux par tout moyen mathématique (comme par exemple méthode des moindres carrés ou méthode PLS) telle que le spectre d'écart (ou spectre différence entre le spectre initial et le résultat de la combinaison linéaire) soit le plus faible possible (critère jugé par exemple par la valeur d'absorbance maximale ou la somme des carrés des valeurs d'absorbance inférieure à une valeur prédéfinie).

Selon un autre aspect, l'invention consiste à proposer un procédé de contrôle du fonctionnement d'un dispositif (ou usine) de fabrication d'un produit (en particulier d'un produit chimique) rejetant un effluent (aqueux), le procédé comportant successivement les étapes suivantes :

- prélever un échantillon dudit effluent,
- mesurer un spectre d'absorption dudit échantillon dans le domaine ultraviolet et/ou visible,
- déterminer la contribution de plusieurs spectres connus d'absorption U.V. ou visible (par des matières et compositions connues) dans la formation dudit spectre mesuré d'absorption par ledit échantillon,
- calculer la différence entre la somme desdites contributions et le spectre mesuré d'absorption par ledit échantillon,
- actionner une alarme lorsque ladite différence dépasse une valeur prédéterminée, par exemple lorsque la somme des carrés des valeurs du spectre d'écart dépasse un seuil prédéterminé,

lesdites étapes étant répétées au cours du temps, en particulier effectuées régulièrement plusieurs fois par jour, par exemple une fois par heure ou par minute.

La détermination de la contribution des spectres connus dans le spectre d'échantillon est effectuée par une technique de déconvolution du spectre d'échantillon. Cette technique consiste en une décomposition mathématique du "vecteur" spectre d'échantillon selon un ensemble, appelé "base", comportant un petit nombre de vecteurs (spectres de référence) connus ; la déconvolution du spectre d'absorption U.V. ou visible s'appuie, d'un point de vue scientifique, notamment sur la loi de Berr-Lambert.

L'invention repose en partie sur la constatation surprenante qu'il est possible de déterminer simplement, rapidement, à faible coût, qualitativement et quantitativement, la présence de matières ou compositions déterminées dans des effluents (aqueux) industriels, en utilisant un spectrophotomètre U.V. et/ou visible associé à des moyens de calcul et d'enregistrement de données, avec une fiabilité suffisante pour permettre de contrôler le bon fonctionnement d'un dispositif industriel rejetant un effluent et/ou d'un système de collecte et de traitement d'effluents industriels.

Du fait que l'on compare le spectre d'absorption mesuré avec une petite partie (appelée "base") seulement des spectres d'absorption connus constituant la bibliothèque de spectres, on diminue le temps de calcul nécessaire à l'unité centrale pour effectuer la déconvolution, et on augmente la fiabilité des résultats du calcul ; en effet à cause du rapport signal/bruit élevé dans ce genre de spectre d'absorption, l'augmentation du nombre de spectres connus dans la base conduit à une diminution de la fiabilité des résultats du calcul de déconvolution.

Selon une autre caractéristique de l'invention, lorsque la fonction d'écart dépasse une valeur prédéterminée, on constitue automatiquement une autre base (de spectres connus) mieux adaptée à l'échantillon dont le spectre d'absorption a été mesuré ; à cet effet, on recherche dans le spectre mesuré (ou bien dans le spectre d'écart) la présence d'un "pic" ou d'une "bosse" (c'est à dire un maximum local ou une bande d'absorption locale) d'amplitude significative, dont on mémorise la longueur d'onde correspondante ; en cas d'échec de cette recherche on effectue de préférence une nouvelle recherche de pic, dans la dérivée seconde du spectre mesuré (ou respectivement dans la dérivée seconde du spectre d'écart) ; en cas d'échec de ces deux recherches successives, l'unité centrale déclenche une alarme, par exemple une alarme visuelle comportant un message signalant par exemple que l'étude de l'échantillon n'est pas possible et que des analyses complémentaires doivent être effectuées.

En cas de succès de l'une de ces recherches de pic, on recherche dans la bibliothèque des spectres connus, un spectre représentant un pic à la longueur d'onde du pic détecté par la recherche de pic ; en cas d'échec de cette recherche de spectre, l'unité centrale actionne une alarme, par exemple une alarme visuelle comportant un message signalant l'échec et proposant d'ajouter le spectre mesuré à la bibliothèque de spectres connus ; cette procédure est notamment utilisée lorsque dans un réseau de collecte d'effluents, une nouvelle source d'effluents se déverse dans le réseau ; on permet ainsi d'enregistrer la "signature" de la pollution caractéristique de cette nouvelle source.

Lorsque la recherche d'un spectre connu présentant un pic (centré sur la même longueur d'onde que celle détectée par la recherche de pic) aboutit, on remplace un spectre de la base précédemment utilisée pour la déconvolution, par le spectre connu sélectionné par cette recherche ; le spectre éliminé de la base est celui dont la contribution dans le spectre mesuré était la plus faible, comparativement aux autres spectres de la base ; on recommence alors les calculs de déconvolution avec la base de spectres ainsi modifiée.

La présente méthode s'applique particulièrement aux spectres d'absorption U.V. mesurés dans une plage de longueur d'onde allant de 200 à 400 ou de 200 à 350 nanomètres ; la méthode s'applique également aux spectres d'absorption mesurés dans une plage de longueur d'onde s'étendant pour partie dans le domaine U.V. et pour partie dans le domaine visible, en particulier dans une plage allant de 200 à 700 nm ou 750 ou 800 nm, par exemple de 300 à 500 nm ; la méthode s'applique également au domaine visible, de 400 à 750 ou 800 nm ; la bibliothèque peut comporter typiquement 10 à 1000 spectres connus ; la base de spectres peut comporter de trois a dix spectres connus (et différents) choisis parmi ceux de la bibliothèque, et comporte de préférence de quatre à sept ou huit spectres connus seulement.

Cette méthode très simple permet de donner très rapidement des résultats qualitatifs et quantitatifs qui renseignent sur l'état de fonctionnement des sources d'effluents ; il est peu coûteux d'équiper une station de traitement d'effluents (aqueux) d'un ou plusieurs appareils décrits ci-dessus, dont les signaux d'alarme et les résultats d'analyse sont transmis à un dispositif de surveillance centralisé ; les prélèvements d'échantillon et les analyses spectrales peuvent être effectuées automatiquement, par exemple à intervalles de temps réguliers, ou bien sur demande ou bien en réponse à un signal délivré par un dispositif d'analyse d'effluents d'un autre type, lequel signal est caractéristique d'une charge polluante globale anormalement élevée.

Selon un aspect, l'invention consiste à associer ou à intégrer à un spectrophotomètre raccordé à une installation de traitement et de collecte d'effluents liquides (aqueux), des moyens de traitement et de mémorisation de données qui comportent

* des moyens de lecture et d'écriture de spectres d'absorption dans une bibliothèque de spectres,
* des moyens de sélection d'une base de spectres choisis parmi la bibliothèque pour analyser un spectre d'absorption mesuré par ledit spectrophotomètre.

Les moyens de sélection (ou adaptation) de la base de spectre comportent de préférence comme décrit ci-avant :

- un algorithme de recherche de pic dans un spectre,
- un algorithme de calcul de la dérivée seconde d'un spectre,
- un algorithme de comparaison de pic,
- un moyen de modification de la base de spectres par remplacement d'un spectre par un autre.

Les avantages procurés par l'invention seront mieux compris au travers de la description suivante qui se réfère aux dessins annexés, qui illustrent sans aucun caractère limitatif des modes préférentiels de réalisation de l'invention.

La figure 1 illustre schématiquement l'utilisation de dispositifs d'analyse spectrométrique reliés à un poste de contrôle, pour le contrôle du fonctionnement des sources d'effluents et du système de traitement d'effluents.

La figure 2 est un organigramme simplifié illustrant les principales opérations d'un procédé d'analyse conforme à l'invention.

La figure 3 illustre les principaux constituants d'un dispositif d'analyse UV conforme à l'invention.

Les figures 4 et 5 illustrent des spectres d'absorption UV de différents composés et compositions (figure 4) et de différentes sources d'effluents (figure 5).

La figure 6 illustre des spectres d'absorption dans le visible de solutions aqueuses contenant du cuivre, à différentes concentrations.

La figure 7 illustre des spectres d'absorption dans le domaine U.V. et visible de solution aqueuses contenant du chrome de degré d'oxydation égal à 6, de différents pH : (a) en milieu acide, (b) en milieu neutre, et (c) en milieu basique.

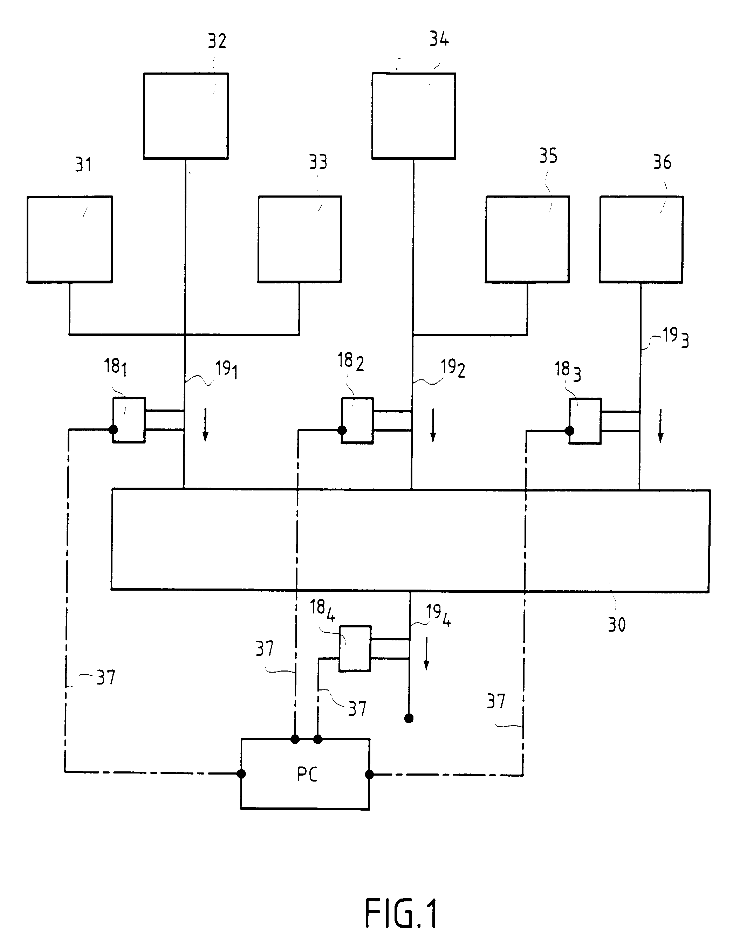

Par référence à la figure 1, l'installation de collecte et de traitement d'effluents aqueux comporte un bassin 30 recueillant les effluents rejetés par six sources 31 à 36 :

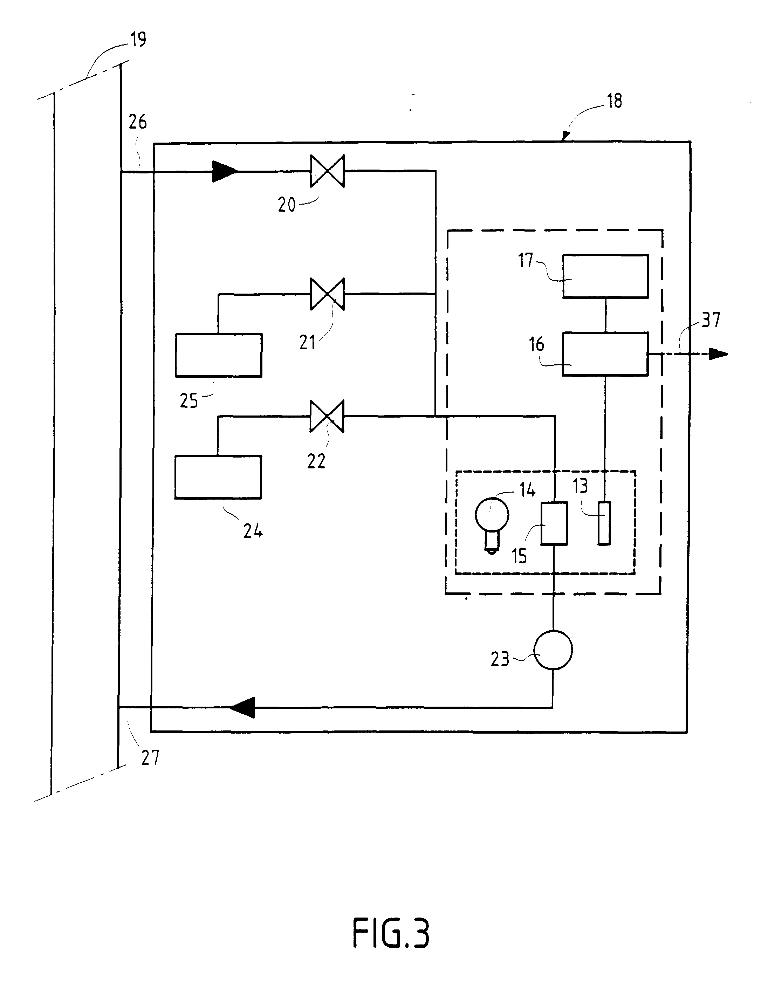

- un dispositif 31 de vapocraquage d'hydrocarbures,
- un dispositif 32 de production de butadiène,
- un dispositif 33 de production d'énergie,
- un dispositif 34 de production d'alcool,
- une unité 35 de production d'oxyde d'éthylène,
- une source 36 constituée par un collecteur recueillant des effluents de diverses industries ; quatre spectrophotomètres UV $18_1$ à $18_4$ sont installés sur les conduits $19_1$ à $19_3$ reliant les sources à l'entrée du bassin 30 et sur le conduit $19_4$ de sortie du bassin 30 (auxquels ils sont reliés par des conduits de prélèvement 26, 27 figure 3) ; les quatre analyseurs 18 sont reliés à un poste de contrôle PC centralisé par des liaisons numériques 37 pour le transfert de signaux et de données.

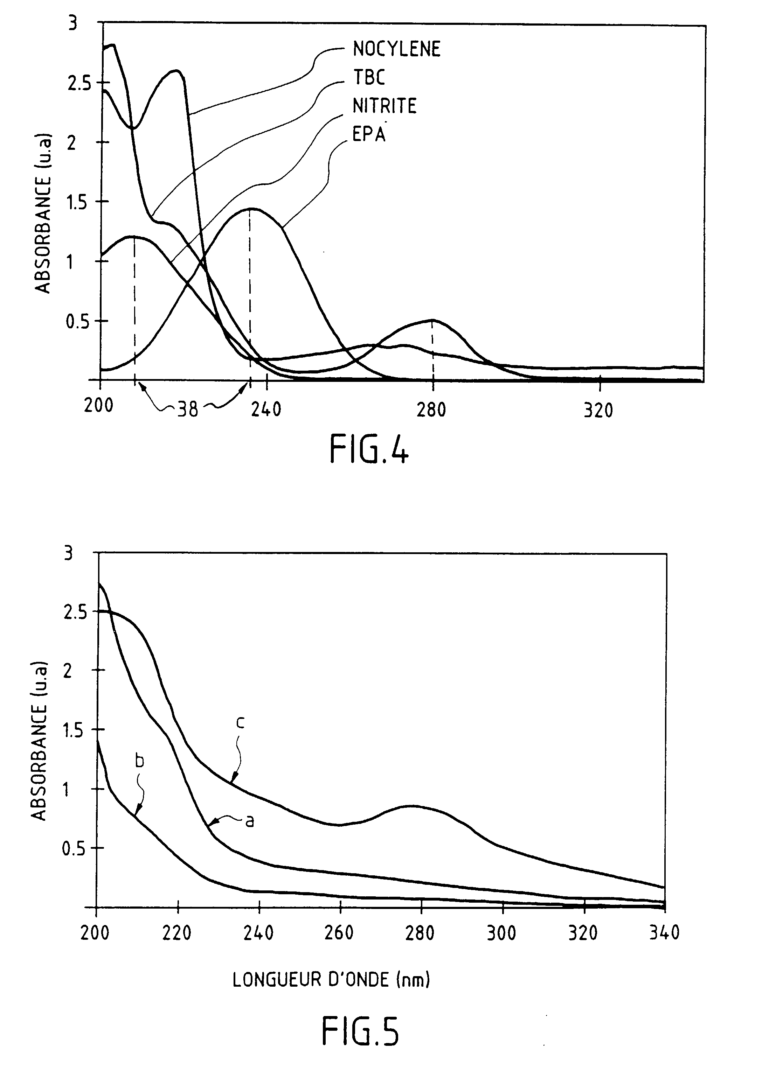

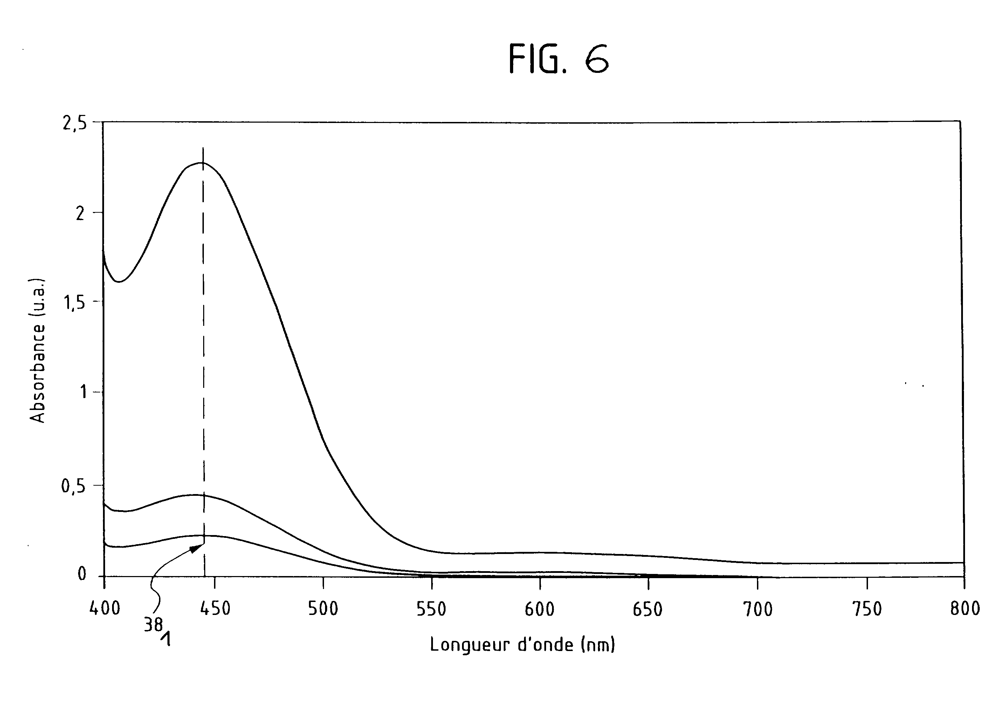

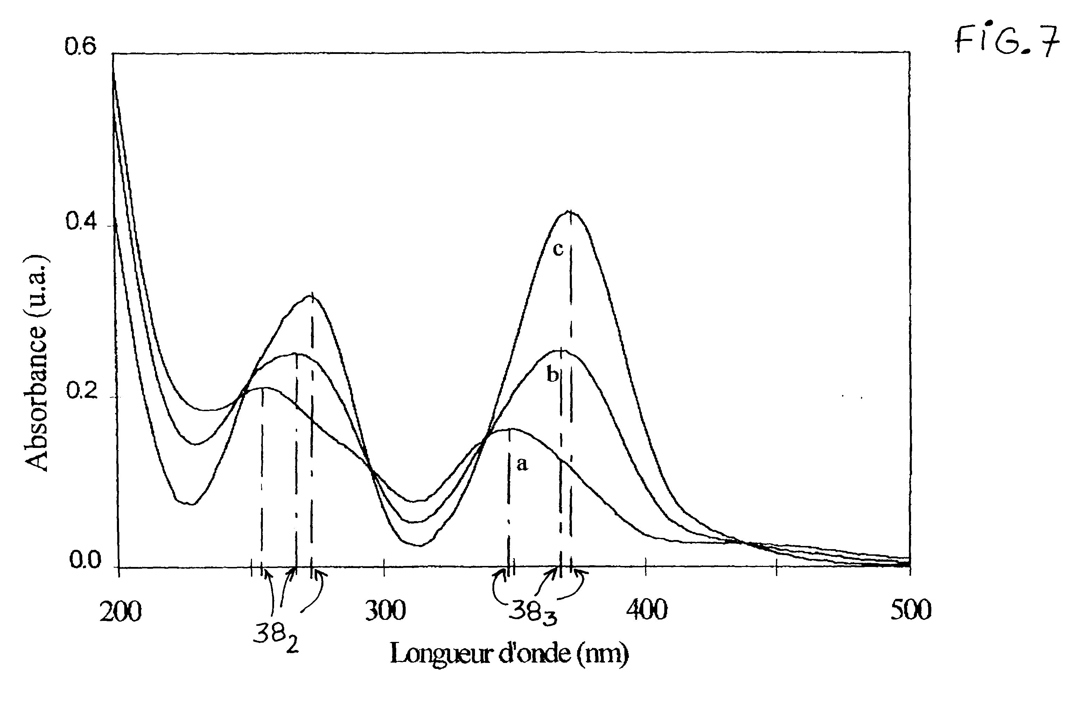

La bibliothèque de spectres d'absorption associée à chaque analyseur 18 comprend différentes catégories de spectres : des spectres de produits "purs" tels que le nocylène (détergent) contenu dans les effluents de la source 31, le tributhylcatechol (TBC) et les ions nitrites contenus dans les effluents de la source 32, l'éthylpropylacroléine (EPA) provenant de la source 33, dont les spectres d'absorption sont illustrés figure 4 ; on voit sur cette figure des bosses centrées sur des longueurs d'onde 38 caractéristiques de chaque produit ; la bibliothèque contient également des spectres (dits globaux) d'absorption UV de rejets (qualifiés de "normaux") des sources 34 et 35 (spectre a figure 5) et des effluents d'une société déterminée recueillis en 36 (spectre b figure 5) ; sur la figure 5, le spectre correspond à une mesure effectuée en sortie du bassin 30 et correspondant à une teneur anormale en TBC ; la bibliothèque de spectres d'absorption associée à chaque analyseur 18 peut comprendre d'autres catégories de spectres notamment des spectres de produits absorbants dans le visible tels que le chrome contenu dans les effluents d'une unité de production de polyéthylène utilisant un catalyseur à base de chrome ; on voit sur la figure 6 une bosse centrée sur une longueur d'onde $38_1$ caractéristique du cuivre, et sur la figure 7 deux bosses centrées sur deux longueurs d'onde $38_2$ et $38_3$ caractéristiques du chrome au degré d'oxydation 6.

La procédure d'analyse d'un spectre d'absorption par déconvolution est basée sur l'hypothèse que chaque spectre mesuré d'un effluent peut être considéré comme une combinaison linéaire d'un petit nombre de spectres particuliers connus appelés spectres de référence ; ces spectres sont choisis de façon déterministe pour les matières et composés susceptibles d'être présents dans l'effluent analysé, et de façon automatique parmi un ensemble de spectres d'échantillons particuliers : ce dernier choix concerne des spectres "globaux" permettant de prendre en compte l'effet des principales interférences. Ainsi, la caractérisation des matières en suspension peut être approchée par un spectre obtenu en soustrayant le spectre d'un échantillon filtré à 1 µm à celui du même échantillon non filtré. De la même façon, l'effet de la fraction colloïdale peut être obtenu par la différence entre un spectre d'un échantillon filtré à 1 µm et le spectre du même échantillon filtré à 0,025 µm ; les interférences liées à la matrice des composés organiques dissous peuvent être représentées par le spectre d'un échantillon filtré à 0,025 µm ; le choix de ces spectres de référence est effectué de préférence par une sélection statistique des spectres les plus indépendants mathématiquement.

Les p coefficients (positifs) ai d'une combinaison linéaire sont calculés par la résolution d'un système basé sur la relation suivante établie pour chaque longueur d'onde λ

$$Se(\lambda) = \Sigma ai . REFi(\lambda) \pm r(\lambda) , i = 1 \text{ à } p \qquad (1)$$

où $Se(\lambda)$ et $REFi(\lambda)$ sont les valeurs respectives d'absorbance de l'échantillon et du spectre de référence i, et $r(\lambda)$ l'écart résultant dans la restitution. Les spectres de référence peuvent être choisis parmi différentes bases enregistrées dans une mémoire de telle sorte que l'écart constaté lors de la restitution soit minimal.

Dans tout les cas le nombre p de spectres de référence constituant une base et utilisés dans la relation (1), est de préférence égal ou inférieur à 10, de préférence de 3 à 10, en particulier de 4 à 7 ou 8.

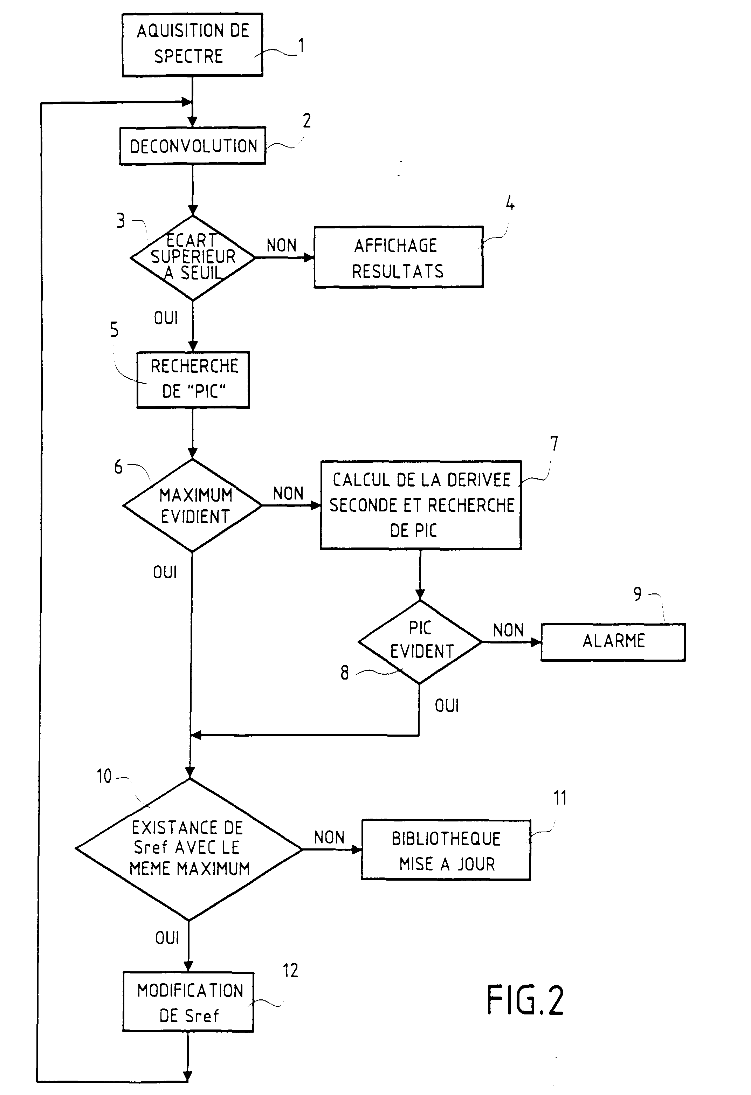

La figure 2 présente la procédure de diagnostic qui permet d'obtenir d'une part des résultats quantitatifs des paramètres globaux (COT, DCO, MES) et de certains paramètres spécifiques (N03, détergents anioniques, Chrome hexavalent) par déconvolution, et d'autre part, des résultats qualitatifs qui permettent dans la plupart des cas de reconnaître l'origine de la pollution, en recherchant dans une bibliothèque de spectres, un ou plusieurs spectres connus présentant un pic a une longueur d'onde sensiblement égale à celle d'un pic détecté dans le spectre mesuré ou dans le spectre d'écart obtenu après déconvolution.

La procédure débute par l'acquisition 1 du spectre après dilution éventuelle de l'échantillon avec de l'eau distillée (ou bidistillée) afin de ne pas enregistrer des valeurs correspondant à une saturation du signal. La déconvolution 2 du spectre acquis est ensuite réalisée avec une base de cinq spectres de référence adaptée à la nature de l'échantillon et du type de contrôle. Le calcul et le test 3 d'écart est ensuite effectué et la procédure s'arrête avec l'affichage 4 des résultats si la valeur calculée est inférieure à un seuil acceptable. Dans ce cas l'estimation des paramètres est calculée à l'aide d'un fichier de calibration préalablement déterminé. Dans le cas contraire, une recherche 5 de pic ou d'épaulement est entreprise. En fonction de l'existence d'un pic évident, la modification 12 de la base de spectres de référence peut être réalisée, avant une nouvelle déconvolution, soit directement, soit après calcul de la dérivée seconde (du spectre mesuré ou du spectre d'écart) et recherche 7 de pic dans cette dérivée.

La procédure s'arrête lorsque l'affichage des résultats est possible ou dans le cas contraire lorsqu'il est impossible d'obtenir un écart acceptable. Dans ce cas, un message avertit l'utilisateur, qui peut alors stocker (11) le spectre mesuré étudié dans la bibliothèque.

Pour l'analyse par déconvolution, deux paramètres importants sont généralement pris en compte, le choix des spectres de référence (nombre et nature) et de la fenêtre de longueur d'onde. Ces paramètres sont retenus de manière à minimiser l'écart de restitution entre le spectre mesuré et le signal restitué à l'issu du calcul. L'étude de l'écart s'appuie non seulement sur le test de la valeur absolue (écart quadratique), mais également sur la distribution de l'écart en fonction des longueurs d'onde. Si la valeur d'écart et sa distribution (son spectre) sont acceptables, les résultats quantitatifs peuvent être obtenus et affichés (4).

Dans le cas contraire, une recherche de pic est entreprise. Par pic, on désigne une zone du spectre significativement déformée, c'est-à-dire différente d'une partie de courbe monotone croissante ou décroissante. Cette recherche se fait tout d'abord de façon spontanée par le repérage d'un maximum évident, s'il en existe au moins un. La mise en évidence d'un maximum ou d'un épaulement à la longueur d'onde $1_2$ peut être effectuée par exemple par la vérification de la relation :

$$A_2 > \frac{A_1 + A_3}{2} + 0{,}02 \qquad (3)$$

où $A_2$ est l'absorbance mesurée à la longueur d'onde $1_2$

et où $A_1$ et $A_3$ sont les valeurs correspondantes à deux longueurs d'onde $1_1$ et $1_3$ situées de part et d'autre de $1_2$ (avec un écart de 5 nm par exemple).

Il arrive que le spectre mesuré (ou d'écart) ne présente pas de maximum évident. Dans ce cas, une recherche de pic de la dérivée seconde (ou d'ordre supérieur) peut être entreprise : l'estimation d'une valeur dérivée d'ordre n à la longueur d'onde 1 peut être approchée par la relation (4), où h est le pas de calcul :

$$\frac{d^n A}{dl} = \frac{d^{n-1}(l+h) - d^{n-1}(1)}{h} \qquad (4)$$

La valeur de la dérivée première (non utilisée) s'exprime donc par la relation (5) :

$$\frac{d A}{dl} = \frac{A(1+h) - A(1)}{h} \qquad (5)$$

A la suite des résultats précédents, la question de la conservation ou du rejet d'un spectre révélé comme différent des spectres de référence constituant la ou les bases utilisées, peut se poser. Il s'agit donc de comparer le spectre obtenu avec les spectres archivés dans la bibliothèque. Cette comparaison peut s'effectuer simplement, à pH équivalent, par l'étude de la position (longueur d'onde centrale) et de la forme du ou des pics. L'étude peut être basée sur la comparaison de la largeur à mi-hauteur d'un pic. Une autre méthode de comparaison consiste à déconvoluer le nouveau spectre a tester a partir des spectres de la bibliothèque. En cas de similitude, c'est-à-dire de restitution correcte évaluée par une valeur faible de l'écart quadratique, le spectre étudié doit être rejeté. Dans le cas contraire, il peut être stocké en tant que nouveau spectre de référence. La prise en compte d'un nouveau spectre de référence doit être accompagnée d'une caractérisation plus poussée de l'échantillon à l'origine de ce spectre.

Le spectrophotomètre 18 illustré figure 3 peut être constitué par un analyseur en ligne vendu par la société SECOMAM (4, rue des Charpentiers 95335 DOMONT CEDEX FRANCE) auquel sont associés ou intégrés les moyens 16 de traitement de données conformes à l'invention, qui consistent essentiellement en :

- des moyens de lecture et d'écriture dans une bibliothèque de spectres,
- des moyens de sélection d'une base de spectres choisis parmi la bibliothèque pour analyser un spectre mesuré par ledit spectrophotomètre, qui comportent :
- un algorithme de recherche de pic dans un spectre,
- un algorithme de calcul de la dérivée seconde d'un spectre,
- un algorithme de comparaison de pic,
- un moyen de modification de la base de spectres par remplacement d'un spectre par un autre.

On peut utiliser un analyseur U.V. comportant un monochromateur (réseau et miroir) fixe et dans lequel la détection est réalisée par photodiodes 13 avec un pas de mesure de 12 nm entre 204 et 321 nm.

Dans ce cas, l'analyseur 18 comporte une lampe UV et une unité électronique 16 de traitement des signaux délivrés par une barrette 13 comportant de 10 à 200 (de préférence de 10 à 150) capteurs sensibles aux ultraviolets, tels que des diodes, qui mesurent la partie du flux lumineux émis par la lampe 14 qui leur est transmise après passage au travers de la cuve 15 contenant l'échantillon à analyser ; l'unité 16 est raccordée à un afficheur 17 et comporte une interface de (télé) communication pour sa liaison à un poste de contrôle ; l'unité électronique 16 commande notamment le fonctionnement de la pompe 23 et des électrovannes pour assurer un prélèvement automatique d'échantillons en fonction de signaux de commande reçus du poste PC (figure 1).

Pour la mesure dans le visible on peut utiliser un matériel similaire équipé d'une lampe, d'un monochromateur et de diodes adaptés aux longueurs d'onde correspondantes.

L'analyseur possède trois électrovannes 20 à 22 et une pompe 23 permettant simultanément l'aspiration de l'eau de rinçage (eau distillée et eau de javel), de l'eau distillée pour la mesure du blanc (respectivement contenues dans un réservoir 24, 25), et de l'échantillon à analyser ; à cet effet l'analyseur 18 est raccordé au conduit 19 de transport d'effluents par des conduits 26, 27. Une cuve 15 à circulation en quartz de 5 mm est utilisée ; un système de dilution (non représenté) est aussi mis en oeuvre pour les échantillons concentrés.

Les échantillons sont généralement étudiés sans dilution, en cuve de 10 mm de trajet optique, sauf si l'absorbance maximale du spectre (généralement vers 200 nm) dépasse la valeur de 2,5 u.a. (unité d'absorbance), ce qui témoigne de l'existence d'un phénomène de saturation du détecteur. A cette valeur d'absorbance correspond une intensité lumineuse mesurée égale à environ 3 pour mille de l'intensité incidente. Dans le cas d'une saturation, l'échantillon doit être dilué avec de l'eau de qualité au moins égale à celle d'une eau bidistillée ou le trajet optique peut être réduit. Cette valeur limite de 2,5 u.a. dépend de différents facteurs dont les qualités optiques du spectrophotomètre, la nature des solutés et de la solution utilisée pour faire le zéro, sauf si c'est de l'eau bidistillée ou équivalente ; des précautions sont généralement prises lors de l'acquisition d'un spectre : le spectrophotomètre est en particulier calibré régulièrement et la propreté de la cuve 15 en quartz vérifiée.

## Revendications

1. Procédé d'analyse d'un effluent par spectrophotométrie d'absorption, caractérisé en ce qu'il comporte les opérations suivantes :

   a) on choisit des spectres connus d'absorption de lumière U.V. ou visible, parmi une pluralité de spectres contenus dans une bibliothèque, pour former une base comportant de trois à dix spectres connus,
   b) on détermine par déconvolution la contribution des spectres de la base dans la formation d'un spectre d'absorption mesuré pour un échantillon dudit effluent, on détermine par soustraction un spectre d'écart, et lorsqu'une valeur du spectre d'écart dépasse un seuil prédéterminé , on recherche la présence d'un pic dans le spectre mesuré ou dans le spectre d'écart, puis en fonction du succès ou de l'échec de la recherche :
   c) soit, on modifie la base et on exécute un nouveau calcul de déconvolution selon l'étape b) ci dessus,
   d) soit on enregistre le spectre mesuré ou bien le spectre d'écart, pour permettre de l'ajouter à la bibliothèque,
   e) soit on actionne une alarme.

2. Procédé selon la revendication 1 dans lequel, pour modifier la base de spectres, on remplace le spectre de la base dont la contribution dans le spectre mesuré est la plus faible, par un spectre de la bibliothèque présentant un pic pour une longueur d'onde identique à celle correspondant à un pic du spectre mesuré ou du spectre d'écart.

3. Procédé selon la revendication 2, dans lequel en cas d'échec d'une recherche de pic dans le spectre mesuré ou dans le spectre d'écart, on effectue une recherche de pic dans la dérivée seconde de celui-ci.

4. Procédé selon l'une quelconque des revendications 1 à 3, dans lequel on mesure des spectres d'absorption dudit échantillon d'effluent aqueux dans une plage de longueur d'onde allant de 400 à 800 nm.

5. Procédé selon l'une quelconque des revendications 1 à 3, dans lequel on mesure des spectres d'absorption dudit échantillon d'effluent aqueux dans une plage de longueur d'onde allant de 200 à 400 nm.

6. Procédé selon l'une quelconque des revendications 1 à 3, dans lequel on mesure des spectres d'absorption dudit échantillon d'effluent aqueux dans une plage de longueur d'onde allant de 300 à 500 nm.

7. Procédé de contrôle du fonctionnement d'un dispositif de fabrication d'un produit rejetant un effluent, le procédé comportant successivement les étapes suivantes :

- prélever un échantillon dudit effluent,
- mesurer un spectre d'absorption par ledit échantillon de lumière U.V. ou visible,
- déterminer la contribution des spectres faisant partie d'une base contenant de trois à dix spectres connus d'absorption de lumière U.V. ou visible, dans la formation dudit spectre mesuré d'absorption par ledit échantillon,
- calculer la différence entre la somme desdites contributions, et le spectre mesuré d'absorption par ledit échantillon,
- actionner une alarme lorsque ladite différence dépasse une valeur prédéterminée,

    lesdites étapes étant répétées au cours du temps.

**8.** Procédé selon la revendication 7 dans lequel on utilise un ou plusieurs spectrophotomètres (18) raccordé(s) à un conduit de transport de l'effluent aqueux et associé à des moyens (16) de traitement et de mémorisation de données, et dans lequel on recherche la présence d'un pic dans le spectre mesuré ou dans le spectre d'écart, puis en fonction du succès ou de l'échec de la recherche :

- soit on modifie la base et on exécute un nouveau calcul de contributions,
- soit on enregistre le spectre mesuré ou bien le spectre d'écart, pour permettre de l'ajouter à une bibliothèque,
- soit on actionne une alarme.

**9.** Procédé selon la revendication 7 ou 8 dans lequel on mesure des spectres d'absorption dudit échantillon dans une plage de longueur d'onde allant de 400 à 800 nm.

**10.** Procédé selon la revendication 7 ou 8 dans lequel on mesure des spectres d'absorption dudit échantillon dans une plage de longueur d'onde allant de 200 à 400 nm.

**11.** Procédé selon la revendication 7 ou 8 dans lequel on mesure des spectres d'absorption dudit échantillon dans une plage de longueur d'onde allant de 300 à 500 nm.

**12.** Dispositif de contrôle du fonctionnement d'une installation de traitement d'effluents aqueux, qui comporte un bassin (30) de collecte et des conduits (19) de transport d'effluent reliant plusieurs sources d'effluent au bassin, caractérisé en ce qu'il comporte :

- un spectrophotomètre dans le domaine U.V. ou visible (18) monté à demeure et raccordé à un desdits conduits ou audit bassin,
- des moyens (16) de traitement et de mémorisation de données qui comportent :

  * des moyens de lecture et d'écriture dans une bibliothèque de spectres,
  * des moyens de sélection d'une base contenant de trois à dix spectres choisis parmi la bibliothèque pour analyser un spectre mesuré par ledit spectrophotomètre.

**13.** Dispositif selon la revendication 12, dans lequel les moyens de sélection d'une base de spectres comportent :

- un algorithme de recherche de pic dans un spectre,
- un algorithme de calcul de la dérivée seconde d'un spectre,
- un algorithme de comparaison de pic,
- un moyen de modification de la base de spectres par remplacement d'un spectre par un autre.

**14.** Dispositif selon l'une quelconque des revendications 12 ou 13, dans lequel ledit spectrophotomètre est muni de moyens (16, 20, 23) de prélèvement automatique d'échantillons d'effluents, et le dispositif comporte en outre des moyens de communication reliant ledit spectrophotomètre à un poste de contrôle de l'installation, pour la transmission de signaux de données et de commande.

**15.** Dispositif selon l'une quelconque des revendications 12 à 14, qui comporte plusieurs spectrophotomètres reliés à un poste de contrôle par une liaison (37) numérique, chaque spectrophotomètre comportant un monochromateur et une pluralité de diodes (13) sensibles au rayonnement ultraviolet ou visible sortant du monochromateur.

FIG.1

```
            ┌─────────────────┐
            │  AQUISITION DE  │      1
            │     SPECTRE     │
            └─────────────────┘
                     │
                     ▼
            ┌─────────────────┐      2
            │  DECONVOLUTION  │
            └─────────────────┘
                     │
          3          ▼
              ╱─────────────╲      NON      ┌─────────────────┐      4
             ╱    ECART      ╲ ──────────▶  │    AFFICHAGE    │
             ╲  SUPERIEUR    ╱              │    RESULTATS    │
              ╲   A SEUIL   ╱               └─────────────────┘
                ╲────────╱
                  │ OUI
          5       ▼
            ┌─────────────────┐
            │    RECHERCHE    │
            │   DE "PIC"      │
            └─────────────────┘
                     │
          6          ▼
              ╱─────────────╲      NON      ┌──────────────────────────┐   7
             ╱   MAXIMUM     ╲ ──────────▶  │  CALCUL DE LA DERIVEE    │
             ╲   EVIDIENT    ╱              │ SECONDE ET RECHERCHE     │
              ╲────────────╱                │        DE PIC            │
                  │ OUI                     └──────────────────────────┘
                  │                                     │
                  │                                     ▼
                  │                           ╱─────────────╲   NON   ┌──────────┐  9
                  │                          ╱     PIC       ╲ ─────▶  │  ALARME  │
                  │                          ╲   EVIDENT     ╱         └──────────┘
                  │                       8   ╲────────────╱
                  │                               │ OUI
                  │◀──────────────────────────────┘
         10       ▼
           ╱─────────────────╲      NON      ┌─────────────────┐   11
          ╱   EXISTANCE DE    ╲ ──────────▶  │   BIBLIOTHEQUE  │
          ╲  Sref AVEC LE     ╱              │   MISE A JOUR   │
           ╲ MEME MAXIMUM    ╱               └─────────────────┘
             ╲─────────────╱
                  │ OUI
                  ▼
            ┌─────────────────┐      12
            │  MODIFICATION   │
            │    DE Sref      │
            └─────────────────┘
```

# FIG.2

FIG.3

FIG.4

LONGUEUR D'ONDE (nm)

FIG.5

# FIG. 6

EP 0 985 920 A1

FIG.7

EP 0 985 920 A1

Office européen
des brevets

**RAPPORT DE RECHERCHE EUROPEENNE**

Numéro de la demande

EP 99 43 0017

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | O.THOMAS ET AL: "Advanced UV examination of wastewater" ENVIRONMENTAL TECHNOLOGY, vol. 17, 1996, pages 251-261, XP000856285 | 7,8,10, 12 | G01N21/33 G01J3/28 G01N21/85 |
| Y | * abrégé * | 1,5,9, 11,15 | |
| | * page 253, colonne de gauche, ligne 3 - ligne 6 * | | |
| A | * page 253, colonne de droite, ligne 11 - ligne 24 * | 3 | |
| | * page 253, colonne de droite, ligne 32 - ligne 37 * | | |
| | * page 256, colonne de gauche, ligne 22 - ligne 27 * | | |
| | * page 258, colonne de droite, ligne 3 - ligne 11 * * figure 1 * | | |
| | --- | | |
| Y | KAHLE S J ET AL: "HAES - A HYBRID ABSORPTION/EMISSION SPECTROMETER FOR ON-LINE MULTICOMPONENT ANALYSIS OF LIQUIDS" ADVANCES IN INSTRUMENTATION AND CONTROL,US,INSTRUMENT SOCIETY OF AMERICA, RESEARCH TRIANGLE PARK, vol. 47, no. PART 02, page 1287-1294 XP000328958 ISSN: 1054-0032 | 9,11,15 | **DOMAINES TECHNIQUES RECHERCHES (Int.Cl.7)** G01N G01J |
| A | * abrégé * * page 1289, alinéa 1 - alinéa 2 * * page 1291, dernier alinéa * * figures 2,3,7 * | 1,4-6,8 | |
| | --- | | |
| | -/-- | | |

Le présent rapport a été établi pour toutes les revendications

| Lieu de la recherche | Date d'achèvement de la recherche | Examinateur |
|---|---|---|
| LA HAYE | 15 décembre 1999 | Verdoodt, E |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.................................................................
& : membre de la même famille, document correspondant

EPO FORM 1503 03.82 (P04C02)

**EP 0 985 920 A1**

Office européen
des brevets

**RAPPORT DE RECHERCHE EUROPEENNE**

Numéro de la demande

EP 99 43 0017

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | EP 0 522 988 A (ANJOU RECH) 13 janvier 1993 (1993-01-13) * abrégé * * page 4, ligne 18 - ligne 20 * * page 4, ligne 46 - ligne 48 * * page 5, ligne 5 - ligne 8 * * revendications 1,2,6,10,11 * --- | 1,5 | |
| A | O.THOMAS ET AL: "Wastewater quality monitoring" TRENDS IN ANALYTICAL CHEMISTRY, vol. 16, no. 7, 1997, pages 419-424, XP002124460 * page 422, colonne de gauche, ligne 3 - ligne 15 * --- | 1 | |
| A | WO 95 01560 A (TECATOR AB ;KARLBERG BO (SE); KARLSSON MIKAEL (SE)) 12 janvier 1995 (1995-01-12) * abrégé * * page 10, alinéa 2 - page 11, alinéa 1 * * revendications 1,5 * --- | 1,4-12 | DOMAINES TECHNIQUES RECHERCHES (Int.Cl.7) |
| A | WO 92 07326 A (EXXON RESEARCH ENGINEERING CO) 30 avril 1992 (1992-04-30) * abrégé * * page 3, ligne 9 - ligne 17 * * page 3, ligne 32 - ligne 33 * * page 4, ligne 9 - ligne 19 * * page 4, ligne 35 - page 5, ligne 3 * * page 5, ligne 11 - ligne 13 * --- | 1,7,12 | |
| A | US 5 313 406 A (KAUPPINEN JYRKI ET AL) 17 mai 1994 (1994-05-17) * abrégé * * colonne 1, ligne 8 - ligne 14 * * revendications 1,2 * ----- | 1,7,12 | |

Le présent rapport a été établi pour toutes les revendications

| Lieu de la recherche | Date d'achèvement de la recherche | Examinateur |
|---|---|---|
| LA HAYE | 15 décembre 1999 | Verdoodt, E |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

ANNEXE AU RAPPORT DE RECHERCHE EUROPEENNE
RELATIF A LA DEMANDE DE BREVET EUROPEEN NO.      EP 99 43 0017

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-12-1999

| Document brevet cité au rapport de recherche | | Date de publication | Membre(s) de la famille de brevet(s) | | Date de publication |
|---|---|---|---|---|---|
| EP 0522988 | A | 13-01-1993 | FR | 2679032 A | 15-01-1993 |
| | | | AT | 151170 T | 15-04-1997 |
| | | | DE | 69218681 D | 07-05-1997 |
| WO 9501560 | A | 12-01-1995 | SE | 509036 C | 30-11-1998 |
| | | | AU | 7134294 A | 24-01-1995 |
| | | | CN | 1126515 A | 10-07-1996 |
| | | | EP | 0706647 A | 17-04-1996 |
| | | | JP | 8512134 T | 17-12-1996 |
| | | | SE | 9302242 A | 30-12-1994 |
| | | | US | 5641966 A | 24-06-1997 |
| WO 9207326 | A | 30-04-1992 | CA | 2092713 A | 13-04-1992 |
| | | | CA | 2093015 A | 13-04-1992 |
| | | | DE | 69128357 D | 15-01-1998 |
| | | | DE | 69128357 T | 16-07-1998 |
| | | | DE | 69129751 D | 13-08-1998 |
| | | | DE | 69129751 T | 11-02-1999 |
| | | | EP | 0552291 A | 28-07-1993 |
| | | | EP | 0552300 A | 28-07-1993 |
| | | | JP | 6502247 T | 10-03-1994 |
| | | | JP | 6502492 T | 17-03-1994 |
| | | | SG | 48112 A | 17-04-1998 |
| | | | SG | 45468 A | 16-01-1998 |
| | | | WO | 9207275 A | 30-04-1992 |
| | | | US | 5446681 A | 29-08-1995 |
| US 5313406 | A | 17-05-1994 | CA | 2070847 A | 11-12-1993 |
| | | | AU | 4328293 A | 04-01-1993 |
| | | | DE | 69320811 D | 08-10-1998 |
| | | | DE | 69320811 T | 01-04-1999 |
| | | | EP | 0646235 A | 05-04-1995 |
| | | | FI | 945818 A | 09-12-1994 |
| | | | WO | 9325890 A | 23-12-1993 |
| | | | JP | 7507632 T | 24-08-1995 |
| | | | PL | 302264 A | 25-07-1994 |

EPO FORM P0460

Pour tout renseignement concernant cette annexe : voir Journal Officiel de l'Office européen des brevets, No.12/82